(19) Europäisches Patentamt
European Patent Office
Office européen des brevets

(11) **EP 4 697 555 A1**

(12) **EUROPEAN PATENT APPLICATION**

(43) Date of publication:
**18.02.2026 Bulletin 2026/08**

(21) Application number: **25195604.1**

(22) Date of filing: **13.08.2025**

(51) International Patent Classification (IPC):
*H02J 7/00* (2026.01) *H01M 10/44* (2006.01)

(52) Cooperative Patent Classification (CPC):
**H02J 7/94; H01M 10/44; H02J 7/92; H02J 7/96**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **14.08.2024 KR 20240109434**

(71) Applicant: **SAMSUNG SDI CO., LTD.**
**Yongin-si, Gyeonggi-do 17084 (KR)**

(72) Inventor: **HA, Sangmin**
**17084 Yongin-si, Gyeonggi-do (KR)**

(74) Representative: **Gulde & Partner**
**Patent- und Rechtsanwaltskanzlei mbB**
**Berliner Freiheit 2**
**10785 Berlin (DE)**

(54) **SYSTEM AND METHOD FOR CONTROLLING CHARGING OF BATTERY CELL**

(57) Disclosed are a system and a method for controlling charging of a battery cell. The system for controlling charging of a battery cell includes a charging unit configured to generate a charging current by using external power and to transmit the charging current to the battery cell. A charging control unit is configured to control the charging unit to charge the battery cell by reducing the charging current when a voltage of the battery cell reaches a full charge voltage. The charging control unit is also configured to determine a current reduction rate based on a charging unit response time required for changing the charging current. The charging control unit is further configured to control the charging unit to charge the battery cell by reducing the charging current by the determined current reduction rate.

## FIG. 3

**Description**

**BACKGROUND**

1. Technical Field

Aspects of some embodiments of the present disclosure relate to a system and a method for controlling charging of a battery cell, and, to a system and a method for controlling charging of a battery cell, which charge a battery cell by reducing a charging current based on a charging unit response time required for a change in a current value of the charging current.

2. Related Art

An energy storage system (ESS) is a system that stores a large amount of electric energy, supplies the stored electric energy when the electric energy is needed, and increases energy usage efficiency. An ESS may include a battery system, a battery management system (BMS) that manages a battery system such as by monitoring the voltage, current, and temperature of the battery system, a power conversion system (PCS) that performs AC-DC conversion and power distribution functions, an energy management system (EMS) that controls the entire ESS in an integrated manner, such as by controlling the energy flow of the ESS and collecting and managing information on the status or the like of the ESS.

Typically, the battery system of the ESS includes a plurality of battery racks electrically connected to each other, with each battery rack including several tens to hundreds of cells connected in series. In such cells, in a case where each cell voltage is fully charged to an operating voltage and charging continues with the original charging current, overcharging beyond the operating voltage may occur. Accordingly, the PCS limits the voltage by reducing the current to less than the original charging current so that overcharging does not occur. In such a case, when the current reduction rate is large, the charging time may be increased, and when the current reduction rate is small, overcharging may occur if current control is not performed quickly.

The above information disclosed in this Background section is for enhancement of understanding of the background of the present disclosure. It may contain information that does not constitute related (or prior) art.

**SUMMARY**

An object of the present disclosure is to provide a system and a method for controlling charging of a battery cell, which charge a battery cell by reducing a charging current based on a charging unit response time required for a change in a charging current.

However, the technical problem to be solved by the present disclosure is not limited to those described herein, and other problems not mentioned herein, and aspects and features of the present disclosure that would address such problems, will be clearly understood by those skilled in the art from the present disclosure.

A system for controlling charging of a battery cell according to an embodiment of the present disclosure may include: a charging unit configured to generate a charging current by using external power and to transmit the charging current to the battery cell; and a charging control unit configured (1) to control the charging unit to charge the battery cell by reducing the charging current when a voltage of the battery cell reaches a full charge voltage, (2) to determine a current reduction rate based on a charging unit response time required for a change in the charging current, and (3) to control the charging unit to charge the battery cell by reducing the charging current by the determined current reduction rate.

In an embodiment, the charging control unit may record, as a current guide start time, a time when the charging current starts to be reduced as the voltage of the battery cell reaches the full charge voltage.

In an embodiment, the charging control unit may set a first current reduction rate and a first charging unit reaction time as initial settings.

In an embodiment, the charging control unit may transmit to the charging unit a first guide current value that is reduced from a current value of the charging current by the first current reduction rate.

In an embodiment, the charging control unit may measure a second charging unit reaction time in the charging unit required for changing the charging current to the first guide current value from the current guide start time.

In an embodiment, the charging control unit may calculate a second current reduction rate based on the second charging unit reaction time.

In an embodiment, the second current reduction rate may be calculated by:

$$W_{d2} = W_{d1} - \frac{W_{d1}}{T_{r1}} * (T_{r1} - T_{r2})$$

wherein $W_{d1}$ is the first current reduction rate, $W_{d2}$ is the second current reduction rate, $T_{r1}$ is the first charging unit reaction time, and $T_{r2}$ is the second charging unit reaction time.

In an embodiment, the charging control unit may transmit to the charging unit a second guide current value reduced from the first guide current value by the second current reduction rate.

In an embodiment, the charging control unit may control the charging unit to charge the battery cell by reducing the charging current by the second guide current value.

A method of controlling charging of a battery cell according to an embodiment of the present disclosure may include: a charging step of generating, by the charging unit, a charging current by using external power and transmitting the charging current to the battery cell; and a charging control step of controlling, by the charging control unit, the charging unit to charge the battery cell by reducing the charging current when a voltage of the battery cell reaches a full charge voltage, determining a current reduction rate based on a charging unit response time required for a change in the charging current, and controlling the charging unit to charge the battery cell by reducing the charging current by the determined current reduction rate.

In an embodiment, the charging control step may further include recording, as a current guide start time, a time when the charging current starts to be reduced as the voltage of the battery cell reaches the full charge voltage.

In an embodiment, the charging control step may further include setting a first current reduction rate and a first charging unit reaction time as initial settings.

In an embodiment, the charging control step may further include transmitting to the charging unit a first guide current value that is reduced from a current value of the charging current by the first current reduction rate.

In an embodiment, the charging control step may further include measuring a second charging unit reaction time in the charging unit required for changing the charging current to the first guide current value from the current guide start time.

In an embodiment, the charging control step may further include calculating a second current reduction rate based on the second charging unit reaction time.

In an embodiment, the calculating of the second current reduction rate may include calculating the second current reduction rate by:

$$W_{d2} = W_{d1} - \frac{W_{d1}}{T_{r1}} * (T_{r1} - T_{r2})$$

wherein $W_{d1}$ is the first current reduction rate, $W_{d2}$ is the second current reduction rate, $T_{r1}$ is the first charging unit reaction time, and $T_{r2}$ is the second charging unit reaction time.

In an embodiment, the charging control step may further include transmitting to the charging unit a second guide current value reduced from the first guide current value by the second current reduction rate.

In an embodiment, the charging control step may further include controlling the charging unit to charge the battery cell by reducing the charging current by the second guide current value.

According to an embodiment of the present disclosure, by detecting a charging unit reaction time required for changing a charging current and charging a battery cell by reducing a charging current based on the time, charging time can be shortened and overcharging can be prevented.

According to an embodiment of the present disclosure, instead of a fixed current reduction rate of a charging current at the time of full charge, by detecting the time it takes for a current to decrease in a charging unit and guiding by varying the current reduction rate, charging can be performed in a shorter charging time and overcharging can be prevented.

## BRIEF DESCRIPTION OF THE DRAWINGS

The drawings attached to the present specification illustrate embodiments of the present disclosure, and further describe aspects and features of the present disclosure together with the detailed description of the present disclosure. The present disclosure is limited to the embodiments shown in the drawings.

FIG. 1 is a graph showing a current and voltage change over time during CV charging in the related art;
FIG. 2 is a graph showing a current and voltage change over time during the current amount guide simulating CV charging in an ESS in the related art;
FIG. 3 is a diagram schematically illustrating a system for controlling charging of a battery cell according to an embodiment of the present disclosure;
FIG. 4 is a flowchart for explaining a method of controlling charging of a battery cell according to an embodiment of the present disclosure.

FIG. 5 is a diagram illustrating shortening the charging time by the system for controlling charging of a battery cell according to an embodiment of the present disclosure.

## DETAILED DESCRIPTION

Exemplary embodiments of the present disclosure will be described below in detail with reference to the accompanying drawings. Prior to the description, it is noted that the terms or words used in this specification and claims should not be construed as being limited to common or dictionary meanings but instead should be understood to have meanings and concepts in agreement with the spirit of the present disclosure based on the principle that an inventor can define the concept of each term suitably in order to describe his/her own invention in the best way possible. Accordingly, since the embodiments described in this specification and the configurations illustrated in the drawings are only examples of the present disclosure and they do not cover all the technical ideas of the present disclosure, it should be understood that various changes and modifications may be made.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

In order to facilitate understanding of the present disclosure, the accompanying drawings are not drawn to scale and the dimensions of some components may be exaggerated. It should be noted that the same reference numerals are designated to the same components in different embodiments.

Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of exemplary embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of exemplary embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present disclosure and is not intended to limit the present disclosure.

The present disclosure will be described in detail with reference to the attached drawings.

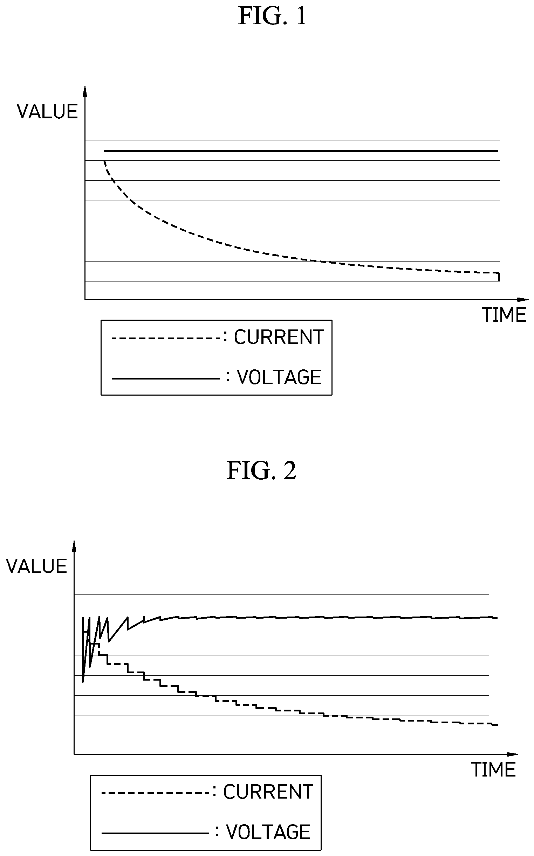

FIG. 1 is a graph showing a current and voltage changes over time during CV charging in the related art.

Referring to FIG. 1, a lithium-ion battery and a lithium iron phosphate (Li-FePO4, LFP) battery in the related art can only be charged by constant voltage (CV) charging, and then the sufficient capacity thereof may be realized. CV charging is a method of charging the battery while maintaining a constant voltage value as illustrated in FIG. 1. CV charging is based on the principle that lithium ions naturally enter an electrode material under a constant pressure so that there is no strain on the battery and stable charging is possible.

FIG. 2 is a graph showing a current and voltage changes over time during the current amount guide simulating CV charging in an ESS in the related art.

Referring to FIG. 2, a power conversion system (PCS) linked to an energy storage system (ESS) in the related art may not support the CV charging as illustrated in FIG. 1. Therefore, a battery management system (BMS) guides the PCS to the amount of current that can be charged, simulates the CV charging, and performs charging.

Since most PCSs control the current according to the current amount guide of the BMS and support no CV mode, they are fully charged according to the current guide. In a case where a cell voltage is fully charged to an operating voltage, when charging continues with an original charging current, the PCS may reach overcharge beyond the operating voltage. Accordingly, the PCS limits the voltage by reducing the current to less current than the original charging current so as not to reach overcharge. In such a case, when the rate of current reduction rate is large, the charging time may increase, and when the rate of current reduction is small, overcharging may occur if current control is not performed quickly.

The rate of current reduction rate may vary depending on the time from when the BMS calculates a current guide value to when the current guide value is transmitted to the energy management system (EMS) or the PCS through communication. The PCS then changes the current value of the charging current to the guided current value.

When the time required for a change in the current value is short, the current reduction rate may be reduced to shorten the time taken to fully charge. But when the time required for change in the current is long, the current reduction rate needs to be increased to prevent overcharging even though the charging time is increased.

However, since such a current value change time varies depending on the PCS type and communication configuration and it is difficult to predict the time, the BMS in the related art provides the PCS with sufficient operation time by fixedly reducing the charging current through an increased current reduction rate in order to prevent overcharging. However, when the charging current is fixedly reduced through an increased current reduction rate, even though the PCS can change the current output more quickly, there is a disadvantage in that the charging time takes too long.

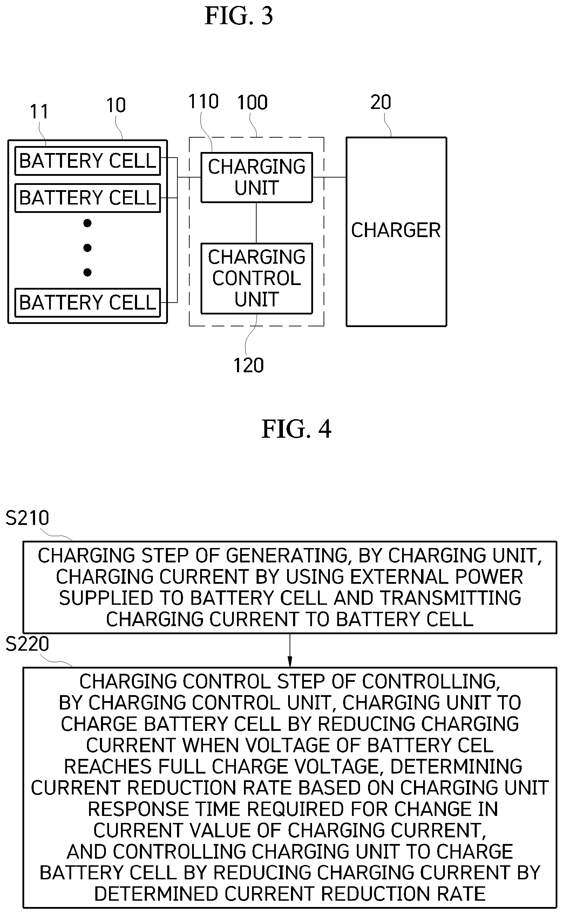

FIG. 3 is a diagram schematically illustrating a system 100 for controlling charging of a battery cell according to an embodiment of the present disclosure.

Referring to FIG. 3, the system 100 for controlling charging of a battery cell according to an embodiment of the present disclosure is connected to several tens to hundreds of battery cells 11 of a battery system 10 included in an energy storage system (ESS) to control charging of each battery cell.

The battery cells 11 that are targets of charging control of the system 100 for controlling charging of a battery cell according to an embodiment of the present disclosure are capable of charging and discharging. Each of the battery cells 11 may include an electrode assembly of a positive electrode/a separator/a negative electrode structure that is sealed inside a battery case, with the electrode assembly being impregnated with a lithium electrolyte. Such an electrode assembly may have a jelly-roll structure (winding type) in which long sheet-shaped positive electrode and negative electrode with active materials applied on both surfaces thereof are wound up into a round shape with a separator interposed therebetween. In other embodiments, the electrode assembly may have a stacked (laminated) structure in which a plurality of positive electrodes and negative electrodes having a predetermined size with active materials applied on both surfaces thereof are sequentially stacked with a separator interposed therebetween. As the battery cells 11, all types of cylindrical and prismatic battery cells, in which an electrode assembly is built into a battery case of a metal can, and pouch-type battery cells, in which an electrode assembly is built into a battery case of an aluminum laminate sheet, may be used depending on a battery type.

A charger 20 is connected to an external power source (not shown) and supplies power to a charging unit 110. The charging unit 110 is connected to the charger 20, generates a charging current by using the external power supplied to the battery cells 11, and transmits the charging current to the battery cells 11. In a non-limiting embodiment, the charging unit 110 may be a PCS. The PCS is a system that converts the characteristics of electricity in order to store or release power in or from the battery, and the PCS performs an alternating current (AC)-direct current (DC) conversion function and a power distribution function. In the system 100 for controlling charging of a battery cell, the PCS serves as the charging unit 110 and may perform the role of charging the battery cells 11 by reducing the charging current according to a current reduction rate determined by a charging control unit 120, as described below.

The charging control unit 120 controls the charging unit 110 to charge the battery cell 11 by reducing the charging current when the voltage of the battery cell 11 reaches a full charge voltage, determines the current reduction rate based on a charging unit response time required for a change in the current value of the charging current, and controls the charging unit 110 to charge the battery cell 11 by reducing the charging current by the determined current reduction rate. In a non-limiting embodiment, the charging control unit 120 may be a BMS. The BMS may manage the battery system 10 such as by monitoring the voltage, current, temperature, and the like of the battery system 10. The BMS may also monitor the state of charge (SOC), the state of health (SOH), and the like. The BMS may further perform control functions (for example, temperature control, cell balancing control, charge/discharge control, and the like), protection functions (for example, over-discharge, overcharge, overcurrent prevention, and the like) based on the monitoring results. In the system 100 for controlling charging of a battery cell according to an embodiment of the present disclosure, the BMS serves as a charging control unit 120 and may serve to determine the current reduction rate and control the charging unit 110 to charge the battery cell 11 by reducing the charging current by the determined current reduction rate.

In a non-limiting embodiment, the charging control unit 120 records, as a current guide start time point, a time point when the charging current starts to be reduced as the voltage of the battery cell 11 reaches the full charge voltage. Subsequently, the charging control unit 120 sets a first current reduction rate and a first charging unit response time as initial setting values. In general, the BMS may have a basic current reduction rate and a basic PCS response time for the current amount guide. In an embodiment, the first current reduction rate may be the basic current reduction rate of the BMS, and the first charging unit response time may be the basic PCS response time of the BMS. For example, the first current reduction rate may be set to 12.5%, and the first charging unit response time may be set to 90 seconds.

Subsequently, the charging control unit 120 transmits a first guide current value reduced from the current value of the charging current by the first current reduction rate to the charging unit 110. For example, when the full charge voltage of the battery cell 11 is 4.15 V and the current is 40 A when the full charge voltage is reached, the charging control unit 120 calculates the first guide current value by reducing the current value by the first current reduction rate of 12.5%. That is, the first guide current value is 35 A according to the calculation 40-(40*0.125). The first guide current value calculated in this way may be transmitted to the charging unit 110 through a communication line.

Subsequently, the charging control unit 120 measures a second charging unit reaction time in the charging unit 110 required for the change from the current value of the charging current to the first guide current value from the current guide start time point. For example, the charging control unit 120 measures the time required for a change from the present current of 40 A to the first guide current value of 35 A from the current guide start time point. In such a case, the charging control unit 120 may calculate a second current reduction rate based on the second charging unit reaction time. In an embodiment, the second current reduction rate may be calculated by the following Equation 1, wherein the first current reduction rate is $W_{d1}$, the second current reduction rate is $W_{d2}$, the first charging unit reaction time is $T_{r1}$, and the second charging unit reaction time is $T_{r2}$.

Equation 1:

$$W_{d2} = W_{d1} - \frac{W_{d1}}{T_{r1}} * (T_{r1} - T_{r2})$$

For example, when the time required for a change in the present current 40 A to 35 A, that is, when the second charging unit reaction time of $T_{r2}$ is 45 seconds, the second current reduction rate is 6.25% by the calculation 12.5%-(12.5%/90)*(90-45).

When the second current reduction rate is calculated in this way, the charging control unit 120 transmits a second guide current value that is less than first guide current value by the second current reduction rate to the charging unit 110. For example, when the voltage of the battery cell 11 reaches the full charge voltage of 4.15 V again, the second guide current value is a value reduced from the current first guide current value of 35 A by the second current reduction rate of 6.25%, that is, is 32.8125 A obtained by the calculation 35-(35*0.0625). The second guide current value calculated in this way may be transmitted to the charging unit 110 through a communication line.

Subsequently, the charging control unit 120 controls the charging unit 110 to charge the battery cell 11 by reducing the charging current by the second guide current value. For example, the charging control unit 120 may control the charging unit 110 to charge the battery cell 11 by reducing the charging current to the second guide current value of 32.8125 A per the calculation described above.

According to an embodiment of the present disclosure, by detecting a charging unit reaction time required for a change in a charging current and charging a battery cell by reducing a charging current based on the time, a charging time can be shortened and overcharging can be prevented.

According to an embodiment of the present disclosure, instead of a fixed reduction of a current reduction rate of a charging current at the time of full charge, by detecting the time it takes for a current to decrease in the charging unit 110 and thereby varying the current reduction rate, charging can be performed with a shorter charging time and overcharging can be prevented.

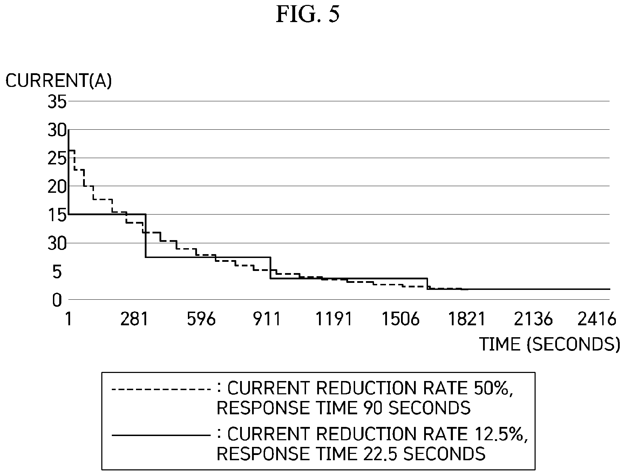

FIG. 5 is a diagram illustrating an example of shortening charging time by the system for controlling charging of a battery cell according to an embodiment of the present disclosure.

Referring to FIG. 5, in a case where the basic current reduction rate, that is, the first current reduction rate, is set to 50% and the basic PCS response time, that is, the first charging unit response time, is set to 90 seconds as the initial setting values, and when the time required for the current to change from 30 A to 15A according to the first current reduction rate is measured to be 22.5 seconds, then 12.25% (=50%-(50%/90)*(90-22.5)) may be calculated as the second current reduction rate according to Equation 1 per the calculation described above. When charging is performed according to the first charging unit reaction time and the first current reduction rate as in the related art, the full charge time is about 2427 seconds, whereas when charging is performed according to the second charging unit reaction time and the second current reduction rate by the system 100 for controlling charging of a battery cell according to an embodiment of the present disclosure, the full charge time is about 1790 seconds. Thus, the charging time is significantly reduced by embodiments of the present disclosure.

FIG. 4 is a flowchart for explaining a method of controlling charging of a battery cell according to an embodiment of the present disclosure.

As illustrated in FIG. 4, the method of controlling charging of a battery cell according to an embodiment of the present disclosure may include steps S210 and S220.

Step S210 is a charging step of generating, by the charging unit, a charging current by using external power supplied to a battery cell and transmitting the charging current to the battery cell.

Step S220 is a charging control step of controlling, by the charging control unit, the charging unit to charge the battery cell by reducing the charging current when a voltage of the battery cell reaches a full charge voltage, determining a current reduction rate based on a charging unit response time required for a change in a current value of the charging current, and controlling the charging unit to charge the battery cell by reducing the charging current by the determined current reduction rate.

In an embodiment, step S220 may include a step of recording, as a current guide start time point, a time when the charging current starts to be reduced as the voltage of the battery cell reaches the full charge voltage. Step S220 may further include a step of setting a first current reduction rate and a first charging unit response time as initial setting values. Further, step S220 may include a step of transmitting a first guide current value reduced from the current value of the charging current by the first current reduction rate to the charging unit. Step S220 may also include a step of measuring a second charging unit reaction time in the charging unit required for a change from the current value of the charging current to the first guide current value from the current guide start time. Step S220 may still further include a step of calculating a second current reduction rate based on the second charging unit reaction time. Step S220 may yet further include a step of transmitting a second guide current value reduced from the first guide current value by the second current reduction rate to the charging unit. Step S220 may also include a step of controlling the charging unit to charge the battery cell by reducing the charging current by the second guide current value.

The method of controlling charging of a battery cell according to embodiments of the present disclosure has been described above with reference to the flow chart presented in the drawings. For simplicity, the method has been illustrated and described as a series of blocks, but the present disclosure is not limited to the order of the blocks, and some blocks may occur in a different order or simultaneously with other blocks illustrated and described in the present specification, and various other branches, flow paths, and orders of blocks that achieve the same or similar results may be implemented. In addition, all the illustrated blocks may not be required for implementing the method described in the present specification.

In the description with reference to FIG. 4, each step may be further divided into additional steps or combined into fewer steps, depending on the implementation of the present disclosure. In addition, some steps may be omitted as needed, and the order between the steps may be changed. In addition, even in the case of other omitted content, the content of FIGS. 1 to 3 and 5 may be applied to the content of FIG. 4. In addition, the content of FIG. 5 may be applied to the content of FIGS. 1 to 3 and 5.

Although the present disclosure has been described above in connection with embodiments, the present disclosure is not limited to the embodiments. A person having ordinary knowledge in the art to which the present disclosure pertains may modify and change the present disclosure within the technical spirit of the present disclosure.

## Claims

1. A system (100) for controlling charging of a battery cell (11), the system (100) comprising:

   a charging unit (110) configured to generate a charging current by using external power and to transmit the charging current to the battery cell (11); and
   a charging control unit (120) configured (1) to control the charging unit (110) to charge the battery cell (11) by reducing the charging current when a voltage of the battery cell (11) reaches a full charge voltage, (2) to determine a current reduction rate based on a charging unit (110) response time required for a change in the charging current, and (3) to control the charging unit (110) to charge the battery cell (11) by reducing the charging current by the determined current reduction rate.

2. The system (100) for controlling charging of a battery cell (11) as claimed in claim 1, wherein the charging control unit (120) records, as a current guide start time, a time when the charging current starts to be reduced as the voltage of the battery cell (11) reaches the full charge voltage.

3. The system (100) for controlling charging of a battery cell (11) as claimed in claim 2, wherein the charging control unit (120) sets a first current reduction rate and a first charging unit (110) reaction time as initial settings.

4. The system (100) for controlling charging of a battery cell (11) as claimed in claim 3, wherein the charging control unit (120) transmits to the charging unit (110) a first guide current value that is reduced from a current value of the charging current by the first current reduction rate.

5. The system (100) for controlling charging of a battery cell (11) as claimed in claim **4,** wherein the charging control unit (120) measures a second charging unit (110) reaction time in the charging unit (110) required for changing the charging current to the first guide current value from the current guide start time.

6. The system (100) for controlling charging of a battery cell (11) as claimed in claim 5, wherein the charging control unit (120) calculates a second current reduction rate based on the second charging unit (110) reaction time.

7. The system (100) for controlling charging of a battery cell (11) as claimed in claim 6, wherein the second current reduction rate is calculated by (1):

$$W_{d2} = W_{d1} - \frac{W_{d1}}{T_{r1}} * (T_{r1} - T_{r2})$$

wherein $W_{d1}$ is the first current reduction rate, $W_{d2}$ is the second current reduction rate, $T_{r1}$ is the first charging unit (110) reaction time, and $T_{r2}$ is the second charging unit (110) reaction time.

8. The system (100) for controlling charging of a battery cell (11) as claimed in claim 6 or 7, wherein the charging control unit (120) transmits to the charging unit (110) a second guide current value reduced from the first guide current value by the second current reduction rate and/or, wherein the charging control unit (120) controls the charging unit (110) to charge the battery cell (11) by reducing the charging current by the second guide current value.

9. A method of controlling charging of a battery cell (11), the method comprising:

a charging step of generating, by a charging unit (110), a charging current by using external power and transmitting the charging current to the battery cell (11); and
a charging control step of controlling, by a charging control unit (120), the charging unit (110) to charge the battery cell (11) by reducing the charging current when a voltage of the battery cell (11) reaches a full charge voltage, determining a current reduction rate based on a charging unit (110) response time required for a change in the charging current, and controlling the charging unit (110) to charge the battery cell (11) by reducing the charging current by the determined current reduction rate.

10. The method of controlling charging of a battery cell (11) as claimed in claim 9, wherein the charging control step further comprises:
recording, as a current guide start time, a when the charging current starts to be reduced as the voltage of the battery cell (11) reaches the full charge voltage.

11. The method of controlling charging of a battery cell (11) as claimed in claim 10, wherein the charging control step further comprises setting a first current reduction rate and a first charging unit (110) reaction time as initial settings.

12. The method of controlling charging of a battery cell (11) as claimed in claim 11, wherein the charging control step further comprises transmitting to the charging unit (110) a first guide current value that is reduced from a current value of the charging current by the first current reduction rate.

13. The method of controlling charging of a battery cell (11) as claimed in claim 12, wherein the charging control step further comprises measuring a second charging unit (110) reaction time in the charging unit (110) required for changing the charging current to the first guide current value from the current guide start time and/or wherein the charging control step further comprises calculating a second current reduction rate based on the second charging unit (110) reaction time.

14. The method of controlling charging of a battery cell (11) as claimed in claim 10, wherein the calculating of the second current reduction rate includes calculating the second current reduction rate by:

$$W_{d2} = W_{d1} - \frac{W_{d1}}{T_{r1}} * (T_{r1} - T_{r2})$$

wherein $W_{d1}$ is the first current reduction rate, $W_{d2}$ is the second current reduction rate, $T_{r1}$ is the first charging unit (110) reaction time, and $T_{r2}$ is the second charging unit (110) reaction time.

15. The method of controlling charging of a battery cell (11) as claimed in claim 13 or 14, wherein the charging control step further comprises transmitting to the charging unit (110) a second guide current value reduced from the first guide current value by the second current reduction rate, and/or wherein the charging control step further comprises controlling the charging unit (110) to charge the battery cell (11) by reducing the charging current by the second guide current value.

FIG. 1

FIG. 2

# FIG. 3

11    10    110  100    20

| BATTERY CELL | | CHARGING UNIT | | CHARGER |

BATTERY CELL

•
•
•

BATTERY CELL

CHARGING CONTROL UNIT

120

# FIG. 4

S210

CHARGING STEP OF GENERATING, BY CHARGING UNIT, CHARGING CURRENT BY USING EXTERNAL POWER SUPPLIED TO BATTERY CELL AND TRANSMITTING CHARGING CURRENT TO BATTERY CELL

S220

CHARGING CONTROL STEP OF CONTROLLING, BY CHARGING CONTROL UNIT, CHARGING UNIT TO CHARGE BATTERY CELL BY REDUCING CHARGING CURRENT WHEN VOLTAGE OF BATTERY CEL REACHES FULL CHARGE VOLTAGE, DETERMINING CURRENT REDUCTION RATE BASED ON CHARGING UNIT RESPONSE TIME REQUIRED FOR CHANGE IN CURRENT VALUE OF CHARGING CURRENT, AND CONTROLLING CHARGING UNIT TO CHARGE BATTERY CELL BY REDUCING CHARGING CURRENT BY DETERMINED CURRENT REDUCTION RATE

FIG. 5

Legend:

- - - - - - - : CURRENT REDUCTION RATE 50%, RESPONSE TIME 90 SECONDS

————— : CURRENT REDUCTION RATE 12.5%, RESPONSE TIME 22.5 SECONDS

Europäisches
Patentamt

European
Patent Office

Office européen
des brevets

# EUROPEAN SEARCH REPORT

**Application Number**

EP 25 19 5604

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/045535 A1 (SUN CHANGYU [CN]) 10 February 2022 (2022-02-10) * paragraphs [0006], [0030] - [0037]; figures 1,3,7 * | 1-15 | INV. H02J7/00 ADD. H01M10/44 |
| X | JP 2024 019899 A (DAIHATSU MOTOR CO LTD) 14 February 2024 (2024-02-14) * paragraphs [0035], [0037]; figures 1,2 * | 1,9 | |
| A | US 2013/002200 A1 (KOBAYASHI MASAYUKI [JP] ET AL) 3 January 2013 (2013-01-03) * paragraphs [0036], [0045], [0048]; figures 1,2 * | 1-15 | |
| A | US 2014/084851 A1 (PARK KYU-HA [KR] ET AL) 27 March 2014 (2014-03-27) * the whole document * | 1-15 | |
| A | US 2022/029446 A1 (ZHANG JUN [CN] ET AL) 27 January 2022 (2022-01-27) * the whole document * | 1-15 | TECHNICAL FIELDS SEARCHED (IPC) H02J H01M |

The present search report has been drawn up for all claims

| Place of search | Date of completion of the search | Examiner |
|---|---|---|
| Munich | 17 December 2025 | Ríos Báez, Abel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 5604

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2025

| Patent document cited in search report | | Publication date | Patent family member(s) | | Publication date |
|---|---|---|---|---|---|
| US 2022045535 A1 | | 10-02-2022 | CN | 114069751 A | 18-02-2022 |
| | | | EP | 3952052 A1 | 09-02-2022 |
| | | | US | 2022045535 A1 | 10-02-2022 |
| JP 2024019899 A | | 14-02-2024 | NONE | | |
| US 2013002200 A1 | | 03-01-2013 | JP | 5774388 B2 | 09-09-2015 |
| | | | JP | 2013013258 A | 17-01-2013 |
| | | | JP | 2015144562 A | 06-08-2015 |
| | | | US | 2013002200 A1 | 03-01-2013 |
| US 2014084851 A1 | | 27-03-2014 | CN | 103765725 A | 30-04-2014 |
| | | | EP | 2741395 A2 | 11-06-2014 |
| | | | JP | 5839210 B2 | 06-01-2016 |
| | | | JP | 2014529291 A | 30-10-2014 |
| | | | KR | 20130036729 A | 12-04-2013 |
| | | | KR | 20140017688 A | 11-02-2014 |
| | | | PL | 2741395 T3 | 31-07-2019 |
| | | | US | 2014084851 A1 | 27-03-2014 |
| | | | WO | 2013051863 A2 | 11-04-2013 |
| US 2022029446 A1 | | 27-01-2022 | CN | 111934369 A | 13-11-2020 |
| | | | EP | 3937335 A1 | 12-01-2022 |
| | | | US | 2022029446 A1 | 27-01-2022 |
| | | | WO | 2020228668 A1 | 19-11-2020 |

EPO FORM P0459

For more details about this annex : see Official Journal of the European Patent Office, No. 12/82